(19)

Europäisches Patentamt

European Patent Office

Office européen des brevets

(11) **EP 3 327 658 A1**

(12) **EUROPEAN PATENT APPLICATION**
published in accordance with Art. 153(4) EPC

(43) Date of publication:
**30.05.2018 Bulletin 2018/22**

(51) Int Cl.:
*G06Q 50/18* [(2012.01)]     *G06Q 10/06* [(2012.01)]

(21) Application number: **16827987.5**

(22) Date of filing: **13.07.2016**

(86) International application number:
**PCT/KR2016/007592**

(87) International publication number:
**WO 2017/014483 (26.01.2017 Gazette 2017/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **21.07.2015 KR 20150102914**

(71) Applicant: **Korea Technology Finance Corporation (KOTEC)**
**Busan 48400 (KR)**

(72) Inventors:
• **HONG, Ki Chul**
**Bucheon-si**
**Gyeonggi-do 14596 (KR)**

• **SHIM, Ki Jun**
**Yangpyeong-gun**
**Gyeonggi-do 12553 (KR)**
• **LEE, Nam Hoon**
**Gwangju 62251 (KR)**
• **HWANG, Yu Jin**
**Busan 46231 (KR)**
• **SEO, Won Chul**
**Busan 48516 (KR)**
• **NOH, Maeng Seok**
**Busan 47520 (KR)**

(74) Representative: **Eisenführ Speiser**
**Patentanwälte Rechtsanwälte PartGmbB**
**Postfach 10 60 78**
**28060 Bremen (DE)**

(54) **TECHNICAL SPILLOVER EFFECT ANALYSIS METHOD**

(57)     Provided is a technical spillover effect analysis method. The technical spillover effect analysis method according to an embodiment of the present invention includes: obtaining technical co-classification information from a patent concurrently technically classified into two or more technical categories from patent data formed of a plurality of patents classified into preset technical categories; calculating the degree of the relationship between the technical categories from the technical co-classification information; and deriving a technical spillover effect for the technology classification using the degree of the relationship between the technical categories.

FIG. 1

EP 3 327 658 A1

**Description**

[Technical Field]

The present disclosure relates to a method of analyzing a technical spillover effect of a patent, and more particularly to a method of evaluating a technical spillover effect of a patent using patent technology classification.

[Background Art]

In general, technological convergence derived from continuous exchange of technological knowledge in between different technological domains becomes a method of overcoming limitations in fragmentary technical development and proposing directionality of drawing innovative technology and products.

Based on the exchange of the technological knowledge, a technical spillover effect is created. In this case, the technical spillover effect refers to an effect on leading technology acquired in a specific technical field to technical development in another field. Thus, the technical spillover effect is recognized as an effect causing other fields to be activated in the form of new product development, production efficiency improvement, etc.

Accordingly, examining a level of technological knowledge flow between technical fields and analyzing a technical spillover effect in a comprehensive way through the examination will establish an important foundation for securing directionality of research and development based on the technological convergence.

By the way, as a result of invention, technical reliability of which is high, a patent is believed to represent a trend of technical innovation and technical development. Such a patent is subjected to technology classification by a predetermined method in the patent office, and it is accepted that this technology classification is considerably reliable. Thus, it is possible to understand the flow of technological knowledge generated in various technology classification units through the analysis of technology classification information about the patent, and further estimate a level of the technical spillover effect on the basis of establishment of a technological knowledge network. Therefore, most studies on the analysis of the technical spillover effect have employed a method of establishing and analyzing a technological knowledge network from patent information.

However, a conventional technical spillover effect analysis method has a problem that too much time and efforts are needed in qualitative evaluation, and the spillover effect analysis method using the patent technology classification analysis has a problem that a relationship between a plurality of technology classifications of each individual patent is ambiguous.

Further, the spillover effect analysis method based on patent application information and an interindustry relations table has a problem that an analysis in a technical unit is difficult since it uses an approach method of not the technical unit but an industrial unit.

[Prior Art Literatures]

[Patent Document]

(Patent document 1) KR 1414502 B

[Disclosure]

[Technical Problem]

The present disclosure is directed to providing a technical spillover effect analysis method of more accurately establishing a relationship between a plurality of technology classifications given to each individual patent, and thus analyzing a technical spillover effect with regard to the plurality of technology classifications.

Further, the present disclosure is direct to providing a technical spillover effect analysis method of considering not only a technical unit but also an industrial unit.

[Technical Solution]

One aspect of the present disclosure provides a technical spillover effect analysis method to be processed in a typical personal computer including a central processing unit, a storage unit, and a memory, the method including operations of:

a) obtaining technical co-classification information with regard to patents including two or more technology classifications from patent data including a plurality of patents classified into preset technology classifications;

b) calculating a direct spillover extent with regard to each technology classification of the obtained technical co-classification information;

c) calculating a comprehensive spillover extent by using the direct spillover extent;

d) setting a minimum support level to 0.1% and 0.05%, setting a minimum confidence level to 0.1% and 0.05%, setting a first patent group on the basis of the minimum support level of 0.1% and the minimum confidence level of 0.1%, setting a second patent group on the basis of the minimum support level of 0.05% and the minimum confidence level of 0.1%, setting a third patent group on the basis of the minimum support level of 0.1% and the minimum confidence level of 0.05%, and setting a fourth patent group on the basis of the minimum support level 0.05% and the minimum confidence level 0.05% to make the number of patents included in each of the patent groups be graded; and

e) analyzing how great the minimum support level and the minimum confidence level have effects on a spillover influence by applying and analyzing a first model for analyzing an influencing level with regard to each of the first to fourth patent groups, a second model for analyzing the influencing level and an influenced level, a third model for obtaining a multiplication of the influencing level and a sensitivity index, a fourth model for summing the multiplication between the influencing level and the sensitivity index and a multiplication between the influenced level and an impact factor, a fifth model for normalizing and summing the influencing level and the influenced level of the second model, and a sixth model for summing a multiplication between the normalized influencing level and the sensitivity index and a multiplication between the normalized influenced level and the impact factor.

The direct spillover extent in the operation b) may include the confidence level calculated by the following Expression 1, and the support level calculated by the following Expression 2.

Expression 1

$$\text{Confidence level } (A \rightarrow B)$$
$$= \frac{\text{number of patents concurrently including technology classifications A and B}}{\text{number of patents including technology classification A}}$$
$$= P(B|A)$$

Expression 2

$$\text{Support level } (A) = \frac{\text{number of patents including technology classification A}}{\text{total number of patents}}$$
$$= P(A)$$

The operation c) may include converting the direct spillover extent into a response matrix using the following Expression 3, obtaining raw data matrix (DRM) with regard to the response matrixes using the following Expression 4, normalizing the raw data matrix through the following Expression 5, and obtaining a comprehensive spillover extent matrix by processing the normalized raw data matrix through the following Expression 6.

Expression 3

$$X^k = [x^k_{ij}]$$

(where, X : a response matrix between technology classifications, x : an element of the response matrix between the technology classifications, k : a patent number, and $x_{ij}$ : a magnitude of an effect that a technology classification i has on a technology classification j)

Expression 4

$$a_{ij} = \frac{1}{H}\sum_{k=1}^{H} x_{ij}^{k}, A = [a_{ij}]$$

(where, A : an impact comparison matrix, $a_{ij}$ : a magnitude of an effect that a technology classification i has on a technology classification j, and H : the number of patents to be analyzed)

Expression 5

$$s = \max\left(max_{1\le i\le n}\sum_{j=1}^{n} a_{ij}, max_{1\le j\le n}\sum_{i=1}^{n} a_{ij}\right), D = \frac{A}{s} = [d_{ij}]$$

(where, A : a raw data matrix, D : a normalized raw data matrix)

Expression 6

$$\lim_{n\to\infty}(I + D + D^2 + D^3 + \cdots + D^m) = (I - D)^{-1}$$

$$T = [t_{ij}] = (D + D^2 + D^3 + \cdots + D^m) = D(I - D)^{-1}$$

(where, I : a unit matrix, D : a normalized raw data matrix, and T : a comprehensive spillover extent matrix)

The influencing level may be a row sum of the comprehensive spillover extent matrix, and the influenced level may be a column sum of the comprehensive spillover extent matrix.

The sensitivity index and the impact factor may be represented by the following Expression 7.

Expression 7

$$\text{Sensitivity index} = [Sensitivity_i]_{n\mathcal{X}1} = \left(\sum_{j=1}^{n}\frac{\sum_{j=1}^{n} r_{ij}}{\frac{1}{n}\sum_{i=1}^{n}\sum_{j=1}^{n} r_{ij}}\right)_{n\mathcal{X}1}$$

$$\text{Impact factor} = [Impact_j]_{1\mathcal{X}n} = \left(\sum_{i=1}^{n}\frac{\sum_{i=1}^{n} r_{ij}}{\frac{1}{n}\sum_{i=1}^{n}\sum_{j=1}^{n} r_{ij}}\right)_{1\mathcal{X}n}$$

(where, $r_{ij}$ is an element of the production inducement coefficients table, and n is the number of all industry categories)

[Advantageous Effects]

A technical spillover effect analysis method according to the present disclosure can accurately analyze a technical spillover effect of patent technology by using a relationship between a plurality of patent technology classifications.

Further, the technical spillover effect analysis method according to the present disclosure can make the technical spillover effect be graded with regard to the technology classifications.

Further, the technical spillover effect analysis method according to the present disclosure can analyze the technical spillover effect by taking not only a technical unit but also an industrial unit into account.

Further, the technical spillover effect analysis method according to the present disclosure can quickly and accurately analyze the technical spillover effect by excluding a technology classification having few or no spillover effects.

[Description of Drawings]

FIG. 1 schematically illustrates operations of obtaining a technical spillover effect analysis method according to the present disclosure.
FIG. 2 illustrates an example of technical co-classification in the technical spillover effect analysis method according to the present disclosure.
FIG. 3 illustrates an example of technical knowledge flow between technical co-classifications.
FIG. 4 illustrates an operation of obtaining a direct spillover extent in the technical spillover effect analysis method according to one embodiment of the present disclosure.
FIG. 5 to FIG. 10 schematically illustrate first to sixth models of the technical spillover effect analysis method according to the present disclosure.

[Modes of the Disclosure]

Hereinafter, embodiments of the present disclosure will be described in detail to be easily realized by a person having ordinary knowledge in the technical field, to which the present disclosure pertains, with reference to the accompanying drawings. The present disclosure may be embodied in many different forms and not limited to the embodiments described herein. Parts unrelated to the descriptions are omitted in the accompanying drawings for clear description of the present disclosure, and like numerals refer to like elements throughout the specification.

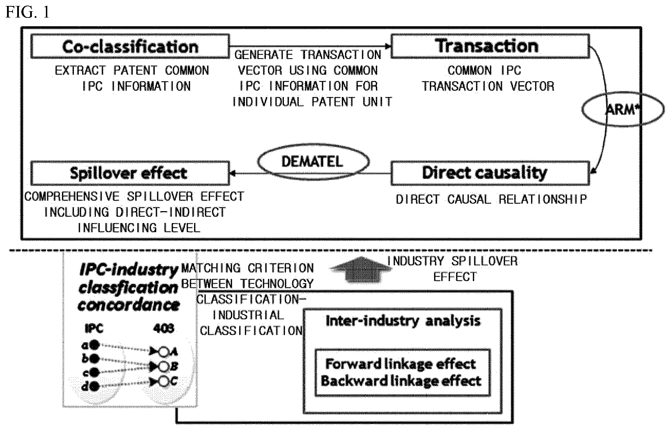

As schematically illustrated in FIG. 1, a technical spillover effect analysis method according to the present disclosure obtains patent technical co-classification information with regard to patents to be subjected to a technical spillover effect analysis, determines a direct spillover extent between technology classifications from the patent technical co-classification information, and calculates a technical spillover effect with regard to each technology classification using the direct spillover extent between the determined technology classifications..

In this case, the technical spillover effect analysis method according to the present disclosure may calculate the technical spillover effect by additionally taking a spillover effect of an industrial field into account besides a technical spillover effect including the direct spillover extent and an indirect spillover extent, based on the indirect spillover extent derived from the direct spillover extent between the technology classifications.

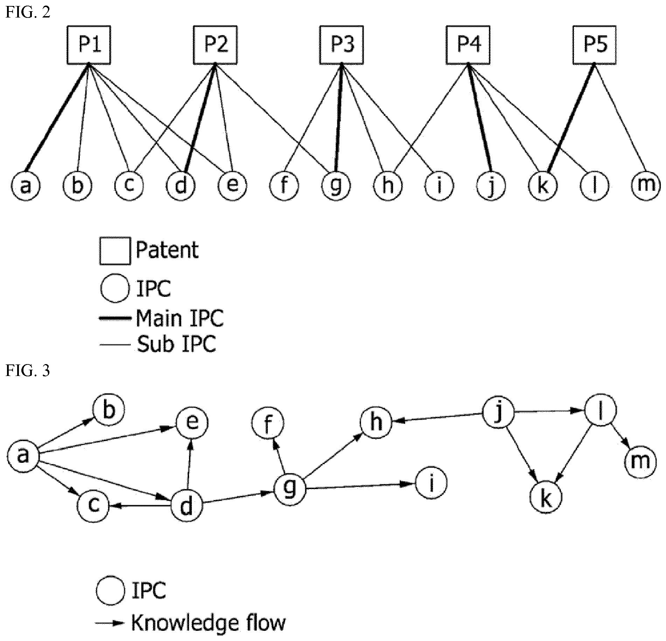

Below, a method of deriving the direct spillover extent will be described in detail with reference to FIG. 2 to FIG. 10.

To derive the direct spillover extent, technical co-classification information is first extracted from patent data.

In this present disclosure, one patent pool including a plurality of patents was used as the patent data for extracting the technical co-classification information. In this case, it is preferable that the plurality of patents included in the patent data are the registered patents. Further, the 'technical co-classification' refers to two or more technology classifications concurrently included in one patent.

According to one embodiment of the present disclosure, the patents registered from 2010 to 2013 in Korea were used as the patent pool.

FIG. 2 and FIG. 3 illustrate the technical co-classification with any patent data including patents PI to P5. In this case, technology classifications in FIG. 2 and FIG. 3 are represented by 'a' to 'm'.

Referring to FIG. 2, all the patents PI to P5 include a plurality of technology classifications, and all the patents in the patent data are construed as having the technical co-classification. Further, as shown in FIG. 3, the technical co-classifications may have relationships with each other by the patents.

In this present disclosure, the relationship between the technology classifications means that one technology classification has a spillover effect on another technology classification.

Since the technical co-classification refers to two or more technology classifications included in a patent, information about the technology classification has to be collected from the patents included in the patent data so as to obtain the technical co-classification information.

Meanwhile, according to one embodiment of the present disclosure, technology classification information including three-stage technology classifications represented with a section- a main category- a sub category in the technology classification information is obtained. That is, according to one embodiment of the present disclosure, only the top three-stages were used among a total of five stages of generally used technology classifications. However, the technology classification information obtained in the present disclosure is not limited to the three-stage technology classification information, and may use less or more stage technology classification information as necessary.

The technology classification information obtained as above according to one embodiment of the present disclosure may be represented as, for example, 'AOIB', 'HO1L', 'A61K', etc.

For convenience of description, the technology classification including all the foregoing three-stage technology classifications will be represented below as sub categories.

In addition, according to one embodiment of the present disclosure, the international patent classification (IPC) was used as the technology classification. However, the technology classification used according to the present disclosure is not limited to only the IPC, and may use various technology classifications such as a UPC, an F-term, etc. as necessary.

Meanwhile, if at least two technology classifications are assigned to one patent as a result of analyzing the technical co-classification information obtained from the patent included in the patent data, concordance between the technology classifications assigned to the patent is determined. According to one embodiment of the present disclosure, the concordance between the technology classifications was determined on the basis of concordance between the sub categories.

In this case, if there are the same sub categories among the sub categories included in one patent, the same sub categories may be integrated into one sub category.

More specifically, if there are AOIK, AOIK, AOIK, and B03M as the sub categories of the patent P, it is determined according to one embodiment of the present disclosure that the patent P has only two sub categories of A01K and B03M since three sub categories of A01K are the same.

Further, according to one embodiment of the present disclosure, the patent, in which only one sub category was remained as a result of integrating the same sub categories among the sub categories included in one patent, was excluded from the patent data. This is because the patent having only one sub category rarely has a relationship with other technology classifications.

Next, when the technical co-classification information is completely extracted, the direct spillover extent between the extracted pieces of technical co-classification information is derived.

The direct spillover extent refers to how great a direct spillover effect between the technology classifications is. That is, if the direct spillover extent between the technology classifications is high, the corresponding technology classifications have a high direct spillover effect on each other. On the other hand, if the direct spillover extent between the technology classifications is low, the corresponding technology classifications have a low direct spillover effect on each other.

In this case, according to one embodiment of the present disclosure, the direct spillover extent includes a support level and a confidence level.

In this present disclosure, the support level shows whether the technology classification included in the patent is also included even in another patent. In this case, the support level shows usability of the corresponding technology classification. That is, if the support level of the corresponding technology classification is very low, it can be determined that the corresponding technology classification is very unlikely to be included in another patent. On the other hand, if the support level of the corresponding technology classification is very high, it can be determined that the corresponding technology classification is very highly likely to be included in another patent.

The support level is calculated by a ratio of the number of patents including a specific technology classification to the number of patents in the whole patent data.

Therefore, the support level of the specific technology classification can be obtained by the following Expression 1 according to one embodiment of the present disclosure.

Expression 1

$$\text{Support level (A)} = \frac{\text{number of patents including technology classification A}}{\text{total number of patents}}$$
$$= P(A)$$

According to one embodiment of the present disclosure, a minimum support level Min Support is set to include only the technology classification having a support level equal to or higher than the minimum support level.

The confidence level shows a technical spillover extent of the specific technology classification to another technology classification.

That is, the confidence level means confidence in the technical spillover extent between two technology classifications (for example, A and B) of the specific technology classification (for example, A) and another technology classification (for example, B). In other words, if the confidence level is high in between the two technology classifications, the technical spillover extent exists with strong confidence in between the two technology classifications.

According to one embodiment of the present disclosure, the confidence level is calculated by a ratio of the number of patents concurrently including the technology classifications related to a specific condition to the number of patents including the technology classification corresponding to the specific condition.

According to one embodiment of the present disclosure, the confidence level in the technical spillover extent of technology A to technology B can be obtained by the following Expression 2.

Expression 2

$$\text{Confidence level } (A \rightarrow B)$$
$$= \frac{\text{number of patents concurrently including technology classifications A and B}}{\text{number of patents including technology classification A}}$$
$$= P(B|A)$$

Through Expression 2, it is possible to evaluate the confidence level in the technical spillover extent of the technology A to the technology B.

Further, according to one embodiment of the present disclosure, the minimum confidence level Min Confidence is set to analyze the technical spillover effect through only the technology classifications having a confidence level equal to or higher than the minimum confidence level.

Meanwhile, an example of the technical spillover extent is shown in the following Table 1.

Table 1

| Condition Technology Classification | Support | Result Technology Classification | Support | Confidence |
|---|---|---|---|---|
| A61Q | 2,589(1.57%) | A61K | 12,534(7.58%) | 86.1% |
| A01P | 528(0.31%) | A01N | 1,135(0.69%) | 80.0% |
| A01H | 457(0.28%) | C12N | 5,825(3.52%) | 67.8% |
| A23F | 433(0.26%) | A23L | 3,379(2.04%) | 67.4% |
| A61P | 7,964(4.82%) | A61K | 12,534(7.58%) | 65.6% |
| F25C | 193(0.12%) | F25D | 843(0.51%) | 63.2% |
| F31Y | 1,548(0.94%) | F31V | 4,388(2.65%) | 60.7% |
| A23F | 314(0.13%) | A23L | 3,379(2.04%) | 58.4% |
| F31W | 671(0.41%) | F31V | 4,388(2.65%) | 56.3% |
| A45F | 175(0.11%) | A45C | 332(0.32%) | 56.0% |
| C12H | 193(0.12%) | C12G | 514(0.31%) | 54.7% |
| H04H | 801(0.24%) | H04N | 5,961(3.60%) | 54.1% |
| A23G | 302(0.18%) | A23L | 3,379(2.04%) | 53.6% |
| C12G | 514(0.31%) | C12R | 1,597(0.97%) | 53.3% |

In Table 1, the condition technology classification corresponds to 'A' in the foregoing example as a technology classification to be evaluated, and the result technology classification corresponds to 'B' in the foregoing example as a technology classification to be evaluated with regard to a relationship with the condition technology classification, i.e. a technology classification forming a technical co-classification with the condition technology classification.

That is, the condition technology classification A61Q in Table 1 is evaluated as having a technical spillover extent of 0.861 to the result technology classification A61K.

Referring to Table 1, the support level shows only an appearance frequency of each technology classification, and the confidence level shows a technical spillover extent of the condition technology classification to the result technology classification.

Therefore, the direct spillover extent can be represented with the confidence level like that obtained in Table 1.

Next, a method of deriving a comprehensive spillover extent will be described below in detail.

The direct spillover extent is a one-to-one spillover extent showing only the direct spillover extent between two technological fields. However, to analyze the technical spillover effect, there is a need of additionally obtaining a spillover extent having an effect through other technical fields as well as the direct spillover extent between two technological fields.

Therefore, it is possible to more accurately analyze the technical spillover effect through the comprehensive spillover extent including both the direct spillover extent and the indirect spillover extent, based on the indirect spillover extent derived from the direct spillover extent.

According to one embodiment of the present disclosure, the comprehensive spillover extent is derived from the direct spillover extent. The obtained direct spillover extent is represented with the confidence level as described above. First, to obtain the comprehensive spillover extent, the direct spillover extent is represented with the following Expression 3 to thereby obtain a response matrix.

Expression 3

$$X^k = [x_{ij}^k]$$

(where, X : a response matrix between technology classifications, x : elements of the response matrix between the technology classifications, k : the patent number, and $x_{ij}$ : a magnitude of an effect that a technology classification i has on a technology classification j)

In this case, the patent number k may be given to prioritizing the patents in predetermined order when a plurality of patents is desired to be analyzed. Therefore, it is possible to obtain all the response matrixes from the patents desired to be analyzed, which are obtained in one pool including the plurality of patents used in the present disclosure. That is, if there are n patents to be analyzed, it may be possible to obtain n response matrixes from the foregoing Expression 1.

Next, n response matrixes all obtained from the whole patents to be analyzed are used to establish a raw data matrix (DRM) by the following Expression 4.

Expression 4

$$a_{ij} = \frac{1}{H} \sum_{k=1}^{H} x_{ij}^k, A = [a_{ij}]$$

(where, A : an impact comparison matrix, $a_{ij}$ : a magnitude of an effect that a technology classification i has on a technology classification j, and H : the number of patents to be analyzed)

In this case, the following Table 2 shows an example of the raw data matrix.

Table 2

|  | A01B | A01C | A01D | A01G | A01H | A01K | A01M | A01N | A01P | A23B |
|---|---|---|---|---|---|---|---|---|---|---|
| A01B | 0.0000 | 0.1905 | 0.2198 | 0.1172 | 0.0000 | 0.0037 | 0.0147 | 0.0000 | 0.0037 | 0.0000 |
| A01C | 0.1683 | 0.0000 | 0.0065 | 0.1974 | 0.0032 | 0.0162 | 0.0388 | 0.0194 | 0.0129 | 0.0065 |
| A01D | 0.2655 | 0.0088 | 0.0000 | 0.1062 | 0.0000 | 0.0265 | 0.0000 | 0.0000 | 0.0044 | 0.0000 |
| A01G | 0.0141 | 0.0268 | 0.0106 | 0.0000 | 0.0079 | 0.0242 | 0.0347 | 0.0119 | 0.0018 | 0.0022 |
| A01H | 0.0000 | 0.0022 | 0.0000 | 0.0394 | 0.0000 | 0.0000 | 0.0000 | 0.0131 | 0.0022 | 0.0000 |
| A01K | 0.0000 | 0.0049 | 0.0059 | 0.0537 | 0.0000 | 0.0000 | 0.0186 | 0.0049 | 0.0029 | 0.0029 |
| A01M | 0.0093 | 0.0280 | 0.0000 | 0.1841 | 0.0000 | 0.0443 | 0.0000 | 0.0303 | 0.0117 | 0.0000 |
| A01N | 0.0000 | 0.0053 | 0.0000 | 0.0238 | 0.0053 | 0.0044 | 0.0115 | 0.0000 | 0.3665 | 0.0035 |
| A01P | 0.0019 | 0.0077 | 0.0019 | 0.0077 | 0.0019 | 0.0058 | 0.0096 | 0.8000 | 0.0000 | 0.0000 |
| A23B | 0.0000 | 0.0025 | 0.0000 | 0.0063 | 0.0000 | 0.0038 | 0.0000 | 0.0050 | 0.0000 | 0.0000 |

In Table 2, $a_{12}$ shows that the magnitude of the effect of A01B on A01C is 0.1905. Meanwhile, $a_{21}$ shows that the magnitude of the effect of A01C on AOIB is 0.1683. In this case, the reason why there is a difference between the two magnitudes is because their confidence levels represented by the foregoing Expression 2 are different in a denominator.

Further, as shown in Table 2, the raw data matrix has only the direct spillover extent information, and therefore diagonal elements of self-corresponding direct spillover extent are represented with 0.

Next, the obtained raw data matrix DRM is normalized.

Specifically, referring to Table 2, the technology classification row of A01B shows the direct spillover extent of AOIB having effects on other technology classifications A01B to A23B. Therefore, when the technology classification rows are all summed with regard to the row of A01B, it is possible to obtain the direct spillover extent of the technology classification of AOIB having effects on all the technology classifications A01B to A23B shown in Table 2.

Therefore, the largest value is obtained among the direct spillover extents of the whole technology classification rows having effects on every technology classification, and likewise the largest value is obtained among the direct spillover extents of the whole technology classification columns having effects on every technology classification, thereby obtaining a larger value between them. In this case, the whole matrix is divided by the larger value between the two values, thereby normalizing the raw data matrix.

That is, the raw data matrix is normalized through the following Expression 5.

Expression 5

$$s = \max\left(max_{1 \leq i \leq n}\sum_{j=1}^{n} a_{ij}, max_{1 \leq j \leq n}\sum_{i=1}^{n} a_{ij}\right), D = \frac{A}{s} = \left\lfloor d_{ij} \right\rfloor$$

(where, A : a raw data matrix, D : a normalized raw data matrix)

Last, the normalized raw data matrix is used to obtain the comprehensive spillover extent matrix.

Since the raw data matrix is a matrix in which the direct spillover extent between the two technology classifications is applied to the whole technology classifications extracted from the patents targeted to be analyzed in the patent data, the normalized raw data matrix shows only the direct spillover extent. Therefore, there is a need of obtaining the comprehensive spillover extent matrix, which involves an indirect relationship, through the following Expression 6 so as to obtain the comprehensive spillover extent.

Expression 6

$$\text{Lim}_{n \to \infty}(I + D + D^2 + D^3 + \cdots + D^m) = (I - D)^{-1}$$

$$T = \left\lfloor t_{ij} \right\rfloor = (D + D^2 + D^3 + \cdots + D^m) = D\,(I - D)^{-1}$$

(where, I : a unit matrix, D : a normalized raw data matrix, and T : a comprehensive spillover extent matrix)

The comprehensive spillover extent matrix obtained through Expression 6 reflects the spillover extent of the comprehensive technology including the direct spillover extent. That is, the sum of technology classification rows in the comprehensive spillover extent matrix shows the comprehensive spillover extent to which the corresponding technology classification influences the whole technology classifications, and the sum of technology classification columns in the comprehensive spillover extent matrix shows the comprehensive spillover extent to which the whole technology classifications influence the corresponding technology classification.

In brief, the direct spillover extent can be obtained by the confidence level between the two technology classifications represented with Expression 2, and the direct spillover extent of all the technology classifications present in the patent data analyzed according to one embodiment of the present disclosure can be reflected by the raw data matrix.

Further, the comprehensive spillover extent can be obtained through the comprehensive spillover extent matrix represented with Expression 6, and this can be obtained from the direct spillover extent through a mathematical operation.

The technical spillover effect analysis method according to the present disclosure may additionally consider other factors such as an industry classification, etc. to the foregoing comprehensive spillover extent.

Accordingly, the technical spillover effect analysis method according to the present disclosure is divided into six technical spillover effect analysis models according to whether these factors are taken into account.

Below, each technical spillover effect analysis method according to the present disclosure will be described in detail.

The row sum r and the column sum c of the comprehensive spillover extent matrix obtained by Expression 6 can be obtained by Expression 7.

In this case, the row sum may be expressed as an influencing level by which one technology classification has a spillover effect on the whole technology classifications, and the column sum may be expressed as an influenced level by which the whole technology classifications have a spillover effect on one technology classification.

Expression 7

$$r = [r_i]_{nX1} = \left( \sum_{j=1}^{n} t_{ij} \right)_{nX1}$$

$$c = [c_j]_{1Xn} = \left( \sum_{i=1}^{n} t_{ij} \right)_{1Xn}$$

(where, $t_{ij}$ is an element of the comprehensive spillover extent matrix)

In this case, the influencing level and the influenced level are the most important factors for the technical spillover effect analysis method.

Meanwhile, the support level of the technology classification extracted for obtaining the direct relationship is also involved in the technical spillover effect analysis method according to the present disclosure.

The support level and the confidence level respectively show the appearance frequency of the technology classification in the patent pool targeted to be analyzed, and the direct spillover extent between two technology classifications. When both the support level and the confidence level are high, it may be determined that both the appearance frequency of the technology classification and the direct spillover extent are high. When both the support level and the confidence level are low, it may be determined that both the appearance frequency of the technology classification and the direct spillover extent are low.

Therefore, the minimum support level and the minimum confidence level are used to exclude a technology classification having a low appearance frequency or a low direct spillover extent, thereby extracting the technical spillover effect. To this end, according to one embodiment of the present disclosure, the minimum support level was set to 0.1% and 0.05%, and the minimum confidence level was set to 0.1% and 0.05%.

In this case, a patent pool having a minimum support level of 0.1% and a minimum confidence level of 0.1% was defined as a first patent group, a patent pool having a minimum support level of 0.05% and a minimum confidence level of 0.1% was defined as a second patent group, a patent pool having a minimum support level of 0.1% and a minimum confidence level of 0.05% was defined as a third patent group, and a patent pool having a minimum support level of 0.05% and a minimum confidence level of 0.05% was defined as fourth patent group to be used.

First, a first model using only the influencing level among six models of the technical spillover effect analysis method according to the present disclosure will be described.

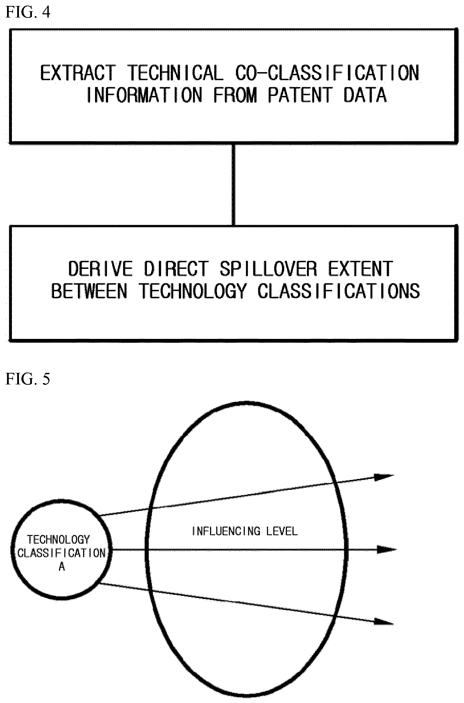

In the comprehensive spillover extent, the influencing level shows the spillover extent, to which one technology classification influences the whole technology classifications, as shown in FIG. 5. Therefore, by obtaining the influencing level on each of the whole technology classifications, the spillover extent, to which each technology classification influences the whole technology classifications, can be determined.

The row sum r of the comprehensive spillover extent matrix obtained through Expression 7 shows the influencing level, i.e. the spillover extent, to which each technology classification influences the whole technology classifications.

Below, an example of the method of obtaining the influencing level will be described.

First, a part of the comprehensive spillover extent matrix with regard to the technology classification in the first patent group is tabulated in the following Table 3. In this case, Table 3 partially shows the comprehensive spillover extent matrix of the technology classification obtained through the calculations of Expression 6 by using the patents registered from 2010 to 2013 in Korea as the patent pool according to one embodiment of the present disclosure.

Table 3

|      | A01B   | A01C   | A01D   | A01G   | A01H   | A01K   | A01M   | A01N   | A01P   | A21D   |
|------|--------|--------|--------|--------|--------|--------|--------|--------|--------|--------|
| A01B | 0.1243 | 0.2374 | 0.2589 | 0.3124 | 0.0190 | 0.0596 | 0.0488 | 0.0593 | 0.0334 | 0.0057 |
| A01C | 0.2096 | 0.0823 | 0.0616 | 0.3866 | 0.0295 | 0.0746 | 0.0738 | 0.1097 | 0.0598 | 0.0089 |
| A01D | 0.3130 | 0.0845 | 0.0793 | 0.2549 | 0.0163 | 0.0703 | 0.0277 | 0.0475 | 0.0273 | 0.0052 |
| A01G | 0.0358 | 0.0509 | 0.0240 | 0.1729 | 0.0282 | 0.0756 | 0.0567 | 0.0674 | 0.0309 | 0.0066 |

(continued)

|  | A01B | A01C | A01D | A01G | A01H | A01K | A01M | A01N | A01P | A21D |
|---|---|---|---|---|---|---|---|---|---|---|
| **A01H** | 0.0098 | 0.0180 | 0.0068 | 0.1370 | 0.1175 | 0.0631 | 0.0177 | 0.1708 | 0.0745 | 0.0171 |
| **A01K** | 0.0134 | 0.0209 | 0.0141 | 0.1684 | 0.0295 | 0.0523 | 0.0369 | 0.0658 | 0.0313 | 0.0076 |
| **A01M** | 0.0309 | 0.0532 | 0.0143 | 0.3126 | 0.0216 | 0.0929 | 0.0424 | 0.1056 | 0.0548 | 0.0061 |
| **A01N** | 0.0132 | 0.0286 | 0.0085 | 0.1359 | 0.0695 | 0.0585 | 0.0382 | 0.5267 | 0.5676 | 0.0138 |
| **A01P** | 0.0168 | 0.0348 | 0.0112 | 0.1397 | 0.0677 | 0.0627 | 0.0443 | 1.2421 | 0.4635 | 0.0139 |
| **A21D** | 0.0072 | 0.0130 | 0.0053 | 0.0788 | 0.0428 | 0.0400 | 0.0123 | 0.0826 | 0.0367 | 0.0671 |

Table 3 shows the comprehensive spillover extent with regard to ten technology classifications A01B to A21D in the comprehensive spillover extent matrix.

In this case, each numeral in Table 3 indicates the comprehensive spillover extent to which the technology classification of the row influences the technology classification of the column, and thus the influencing level of A01B in Table 3 is equal to the row sum of 1.1588, i.e. the sum of comprehensive spillover extent values from A01B to A21D.

Similarly, the foregoing method of obtaining the row sum of the technology classification A01B may be also applied to the technology classifications A01C to A21D of the other rows, thereby calculating the respective influencing levels of the technology classifications A01C to A21D.

By the way, the numbers of whole technology classifications in the first to fourth patent groups are respectively 387, 461, 387 and 461 as shown in the following Table 4, and therefore the row sum in the first patent group is obtained with regard to not 10 technology classifications as shown in Table 3 but 387 technology classifications.

Table 4

| classification | Number of technology classifications | Minimum value | Maximum value | Average | Standard deviation |
|---|---|---|---|---|---|
| First patent group | 387 | 10.77 | 24.21 | 19.38 | 1.80 |
| Second patent group | 461 | 8.93 | 29.81 | 20.06 | 1.95 |
| Third patent group | 387 | 16.00 | 34.76 | 29.26 | 2.69 |
| Fourth patent group | 461 | 16.14 | 52.58 | 48.45 | 3.46 |

Table 4 lists information about the influencing level matrix with regard to each of the patent groups. Here, the influencing level means a spillover influence of the technology classification from the analysis result of the first model.

In case of the first patent group, the number of technology classifications having the spillover influences is 387, a spillover influence value in the technology classification having the minimum spillover influence is 10.77, and a spillover influence value in the technology classification having the maximum spillover influence is 24.21. Further, the spillover influences of the technology classifications average out at 19.38, and have a standard deviation of 1.80.

In case of the second patent group, the number of technology classifications having the spillover influences is 461, a spillover influence value in the technology classification having the minimum spillover influence is 8.93, and a spillover influence value in the technology classification having the maximum spillover influence is 29.81. Further, the spillover influences of the technology classifications average out at 26.06, and have a standard deviation of 1.95.

In case of the third patent group, the number of technology classifications having the spillover influences is 387, a spillover influence value in the technology classification having the minimum spillover influence is 16.00, and a spillover influence value in the technology classification having the maximum spillover influence is 34.76. Further, the spillover influences of the technology classifications average out at 29.26, and have a standard deviation of 2.69.

In case of the fourth patent group, the number of technology classifications having the spillover influences is 461, a spillover influence value in the technology classification having the minimum spillover influence is 16.14, and a spillover influence value in the technology classification having the maximum spillover influence is 52.58. Further, the spillover influences of the technology classifications average out at 48.45, and have a standard deviation of 3.46.

Referring to Table 4, the first patent group and the third patent group have the same number of technology classifications, and the second patent group and the fourth patent group have the same number of technology classifications. Therefore, it may be determined that the minimum support level between the minimum support level and the minimum confidence level used as a reference for the patent group is employed as a criterion for setting the number of technology classifications.

Table 5-1

| First patent group | H01L | H04B | A61K | H04W | H04L | G06F | A61P | C08L | G02F | G01N |
|---|---|---|---|---|---|---|---|---|---|---|
| First model | 19.75 | 21.52 | 23.79 | 21.94 | 21.63 | 20.04 | 24.06 | 19.60 | 20.31 | 19.46 |

Table 5-2

| First patent group | H01L | H04B | A61K | H04W | H04L | G06F | A61P | C08L | G02F | G01N |
|---|---|---|---|---|---|---|---|---|---|---|
| First model | 25.14 | 26.95 | 29.47 | 27.29 | 27.01 | 25.47 | 29.80 | 24.68 | 25.68 | 25.30 |

Table 5-3

| First patent group | H01L | H04B | A61K | H04W | H04L | G06F | A61P | C08L | G02F | G01N |
|---|---|---|---|---|---|---|---|---|---|---|
| First model | 30.60 | 32.07 | 34.28 | 32.56 | 32.24 | 30.72 | 34.50 | 30.42 | 31.20 | 30.13 |

Table 5-4

| First patent group | H01L | H04B | A61K | H04W | H04L | G06F | A61P | C08L | G02F | G01N |
|---|---|---|---|---|---|---|---|---|---|---|
| First model | 48.25 | 49.53 | 51.94 | 49.94 | 49.68 | 48.39 | 52.24 | 47.41 | 48.81 | 48.33 |

Meanwhile, Table 5-1 to Table 5-4 list result values of the same ten technology classifications extracted from results of applying the first model to each patent group. In this case, it can be appreciated that one kind of technology classification has different spillover influences even though each patent group is subjected to the same model. Therefore, it can be appreciated that both the minimum support level and the minimum confidence level, used as criteria for classification of the patent group, influence the technical spillover effect.

Next, the second model of the technical spillover effect analysis method according to the present disclosure, i.e. a model of using the sum of the influencing level and the influenced level will be described.

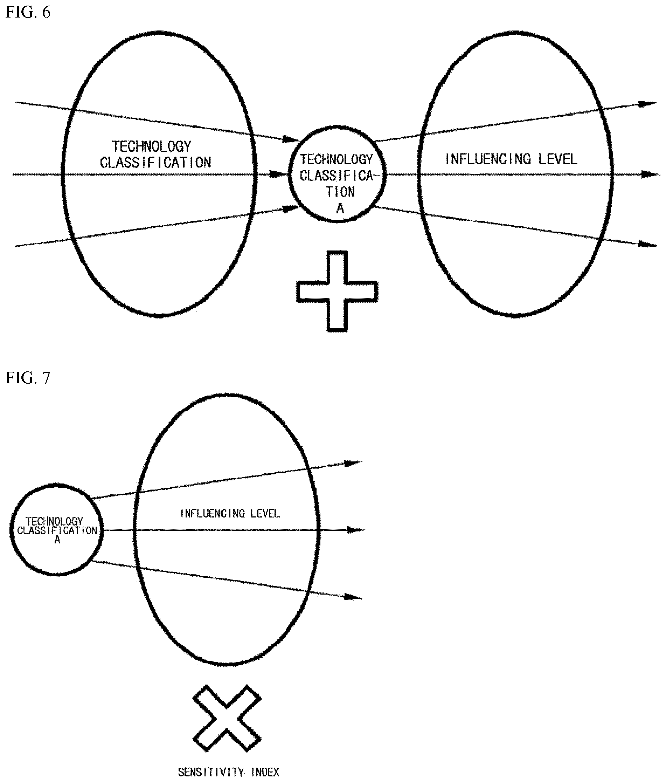

In the comprehensive spillover extent, the influenced level shows the spillover extent obtained by one technology classification from the whole technology classifications, as shown in FIG. 6. Therefore, by obtaining the influenced level on each of the whole technology classifications, the spillover extent obtained by each technology classification from the whole technology classifications can be determined.

Meanwhile, the sum of the obtained influenced level matrix and the influencing level matrix obtained in the foregoing first model shows an impact of the spillover extent exchanged in between the technology classification and other technology classifications. Below, an example of the method of obtaining the impact will be described.

Table 6

| | A01B | A01C | A01D | A01G | A01H | A01K | A01M | A01N | A01P | A21D |
|---|---|---|---|---|---|---|---|---|---|---|
| A01B | 0.1243 | 0.2374 | 0.2589 | 0.3124 | 0.0190 | 0.0596 | 0.0488 | 0.0593 | 0.0334 | 0.0057 |
| A01C | 0.2096 | 0.0823 | 0.0616 | 0.3866 | 0.0295 | 0.0746 | 0.0738 | 0.1097 | 0.0598 | 0.0089 |
| A01D | 0.3130 | 0.0845 | 0.0793 | 0.2549 | 0.0163 | 0.0703 | 0.0277 | 0.0475 | 0.0273 | 0.0052 |
| A01G | 0.0358 | 0.0509 | 0.0240 | 0.1729 | 0.0282 | 0.0756 | 0.0567 | 0.0674 | 0.0309 | 0.0066 |
| A01H | 0.0098 | 0.0180 | 0.0068 | 0.1370 | 0.1175 | 0.0631 | 0.0177 | 0.1708 | 0.0745 | 0.0171 |
| A01K | 0.0134 | 0.0209 | 0.0141 | 0.1684 | 0.0295 | 0.0523 | 0.0369 | 0.0658 | 0.0313 | 0.0076 |
| A01M | 0.0309 | 0.0532 | 0.0143 | 0.3126 | 0.0216 | 0.0929 | 0.0424 | 0.1056 | 0.0548 | 0.0061 |
| A01N | 0.0132 | 0.0286 | 0.0085 | 0.1359 | 0.0695 | 0.0585 | 0.0382 | 0.5267 | 0.5676 | 0.0138 |
| A01P | 0.0168 | 0.0348 | 0.0112 | 0.1397 | 0.0677 | 0.0627 | 0.0443 | 1.2421 | 0.4635 | 0.0139 |

(continued)

| | A01B | A01C | A01D | A01G | A01H | A01K | A01M | A01N | A01P | A21D |
|---|---|---|---|---|---|---|---|---|---|---|
| **A21D** | 0.0072 | 0.0130 | 0.0053 | 0.0788 | 0.0428 | 0.0400 | 0.0123 | 0.0826 | 0.0367 | 0.0671 |

Table 6 shows the comprehensive spillover extent with regard to ten technology classifications AOIB to A21D in the comprehensive spillover extent matrix.

In this case, each numeral in Table 6 indicates the comprehensive spillover extent to which the technology classification of the row influences the technology classification of the column, and thus the influenced level of A01B in Table 6 is equal to the column sum of 0.774, i.e. the sum of comprehensive spillover extent values from AOIB to A21D.

Similarly, the foregoing method of obtaining the column sum of the technology classification AOIB may be also applied to the technology classification columns A01C to A21D, thereby obtaining the respective influenced levels of Table 3.

Thus, the sum of the A01B's influencing level of 1.1588 obtained in the foregoing first model and the A01B's influenced level of 0.774 is 1.9328 as an impact of AO IB.

By the way, the numbers of whole technology classifications in the first to fourth patent groups are respectively 387, 461, 387 and 461 as shown in the following Table 7, and therefore the row sum and the column sum in the first patent group are obtained with regard to not 10 technology classifications as shown in Table 3 but 387 technology classifications.

Table 7

| Classification | Number of technology classifications | Minimum value | Maximum value | Average | Standard deviation |
|---|---|---|---|---|---|
| First patent group | 387 | 12.18 | 249.00 | 38.75 | 29.13 |
| Second patent group | 461 | 9.63 | 380.10 | 52.12 | 42.17 |
| Third patent group | 387 | 18.18 | 374.01 | 58.52 | 43.54 |
| Fourth patent group | 461 | 17.50 | 704.60 | 96.91 | 77.78 |

Table 7 lists information about the impact matrix with regard to each of the patent groups. Here, the impact means a spillover influence of the technology classification from the analysis result of the second model.

In case of the first patent group, the number of technology classifications having the spillover influences is 387, a spillover influence value in the technology classification having the minimum spillover influence is 12.18, and a spillover influence value in the technology classification having the maximum spillover influence is 249.00. Further, the spillover influences of the technology classifications average out at 38.75, and have a standard deviation of 29.13.

In case of the second patent group, the number of technology classifications having the spillover influences is 461, a spillover influence value in the technology classification having the minimum spillover influence is 9.63, and a spillover influence value in the technology classification having the maximum spillover influence is 380.10. Further, the spillover influences of the technology classifications average out at 52.12, and have a standard deviation of 42.17.

In case of the third patent group, the number of technology classifications having the spillover influences is 387, a spillover influence value in the technology classification having the minimum spillover influence is 18.18, and a spillover influence value in the technology classification having the maximum spillover influence is 374.01. Further, the spillover influences of the technology classifications average out at 58.52, and have a standard deviation of 43.54.

In case of the fourth patent group, the number of technology classifications having the spillover influences is 461, a spillover influence value in the technology classification having the minimum spillover influence is 17.50, and a spillover influence value in the technology classification having the maximum spillover influence is 704.60. Further, the spillover influences of the technology classifications average out at 96.91, and have a standard deviation of 77.78.

Referring to Table 7, the first patent group and the third patent group have the same number of technology classifications, and the second patent group and the fourth patent group have the same number of technology classifications. Therefore, it may be determined that the minimum support level between the minimum support level and the minimum confidence level used as a reference for the patent group is employed as a criterion for setting the number of technology classifications.

Table 8-1

| First patent group | H01L | H04B | A61K | H04W | H04L | G06F | A61P | C08L | G02F | G01N |
|---|---|---|---|---|---|---|---|---|---|---|
| Second model | 249.00 | 224.37 | 224.21 | 174.11 | 167.91 | 157.47 | 151.36 | 143.82 | 127.16 | 123.18 |

Table 8-2

| First patent group | H01L | H04B | A61K | H04W | H04L | G06F | A61P | C08L | G02F | G01N |
|---|---|---|---|---|---|---|---|---|---|---|
| Second model | 380.10 | 344.91 | 338.94 | 264.84 | 256.22 | 242.72 | 226.85 | 218.04 | 190.95 | 189.34 |

Table 8-3

| First patent group | H01L | H04B | A61K | H04W | H04L | G06F | A61P | C08L | G02F | G01N |
|---|---|---|---|---|---|---|---|---|---|---|
| Second model | 374.01 | 335.40 | 327.48 | 260.08 | 251.01 | 237.02 | 220.68 | 216.68 | 191.55 | 185.21 |

Table 8-4

| First patent group | H01L | H04B | A61K | H04W | H04L | G06F | A61P | C08L | G02F | G01N |
|---|---|---|---|---|---|---|---|---|---|---|
| Second model | 704.60 | 635.77 | 608.81 | 488.07 | 472.37 | 450.05 | 406.56 | 404.90 | 354.99 | 350.36 |

Meanwhile, Table 8-1 to Table 8-4 list result values of the same ten technology classifications extracted from results of applying the second model to each patent group.

In this case, it can be appreciated that one kind of technology classification has different spillover influences even though each patent group is subjected to the same model. Therefore, it can be appreciated that both the minimum support level and the minimum confidence level, used as criteria for classification of the patent group, influence the technical spillover effect.

Meanwhile, the comprehensive spillover extent is more accurate and useful if it is obtained by considering an industrial field as well as a technical field. Therefore, if a parameter for determining an industrial spillover extent through an interindustry analysis is extracted and used in analyzing the comprehensive spillover extent, it is possible to acquire a more accurate and useful model of analyzing a technical spillover field.

The interindustry analysis is a method of quantitatively analyzing an interconnected relationship between industries based on an interindustry relations table. The interindustry relations table is a statistical chart, in which business relations between industries for a predetermined period of time are recorded in the form of matrix based on certain rules, and is used as an empirical tool for an economic analysis.

Two parameters that can be obtained through the interindustry analysis are respectively represented by a sensitivity index and an impact factor.

As a coefficient of showing a degree of a forward linkage effect on a certain industry category when a final demand for products of all industry categories is generated by one unit, the sensitivity index is defined by dividing the row sum of a production inducement coefficients table by an average of the whole production inducement coefficients.

Further, as a coefficient of showing a degree of a backward linkage effect on all the industry categories when a final demand for products of a certain industry category is generated by one unit, the impact factor is defined by dividing the column sum of the production inducement coefficients table by an average of the whole production inducement coefficients.

In this case, the sensitivity index and the impact factor are represented by the following Expression 8.

Expression 8

$$\text{Sensitivity index} = \left[Sensit \square\square ity_i\right]_{nX1} = \left(\Sigma_{j=1}^{n} \frac{\Sigma_{j=1}^{n} r_{ij}}{\frac{1}{n}\Sigma_{i=1}^{n}\Sigma_{j=1}^{n} r_{ij}}\right)_{nX1}$$

$$\text{Impact factor} = \left[Impact_j\right]_{1Xn} = \left(\Sigma_{i=1}^{n} \frac{\Sigma_{i=1}^{n} r_{ij}}{\frac{1}{n}\Sigma_{i=1}^{n}\Sigma_{j=1}^{n} r_{ij}}\right)_{1Xn}$$

(where, $r_{ij}$ is an element of the production inducement coefficients table, and n is the number of all industry categories)

In this case, according to one embodiment of the present disclosure, the production inducement coefficients table, i.e. one of the interindustry relations tables using technology classification-403 industrial classification linkage standards provided by The Bank of Korea was used as the interindustry relations table used for the interindustry analysis.

Next, the third model of the technical spillover effect analysis method according to the present disclosure, i.e. a model of using a multiplication of the influencing level and the sensitivity index will be described.

As shown in FIG. 7, the multiplication of the influencing level and the sensitivity index involves both the technical spillover extent and the industrial spillover extent by multiplying the spillover extent, to which one technology classification obtained in FIG. 5 influences the whole technology classifications, and the sensitivity index of signifying the industrial spillover extent together.

Below, an example of the method of obtaining the multiplication between the influencing level and the sensitivity index will be described.

First, the matrix listing values of factors for obtaining the comprehensive spillover extent with regard to the technology classification of the first patent group is partially shown in the following Table 9.

Table 9

| Technology Classification | Influencing level(r) | Sensitivity index | Influencing level $\times$ sensitivity index |
|---|---|---|---|
| G06Q | 20.2645 | 5.2705 | 106.8034 |
| C10G | 19.2607 | 3.4171 | 65.8164 |
| G08G | 20.7786 | 2.8854 | 59.9550 |
| C10L | 18.8007 | 2.2559 | 42.4123 |
| F17D | 20.4017 | 2.0523 | 41.8695 |
| B21B | 19.2490 | 1.9029 | 36.6292 |
| A23K | 21.9307 | 1.6339 | 35.8328 |
| H04M | 21.5030 | 1.3371 | 28.7523 |
| H04B | 20.0056 | 1.3725 | 27.4584 |
| A01K | 19.0728 | 1.4026 | 26.7516 |

Table 9 shows the influencing level, the sensitivity index, and the multiplication between the influencing level and the sensitivity index of the top 10 technology classifications, which are obtained in accordance with magnitudes of the multiplication between the influencing level and the sensitivity index, among the technology classifications of the first patent group.

Here, the influencing level is obtained in the foregoing first model, and thus descriptions thereof will be avoided. Meanwhile, the sensitivity index can be obtained by the foregoing Expression 8.

As a result, the technology classification G06Q in Table 9 has an influencing level of 20.2645 and a sensitivity index of 5.2705. Therefore, the multiplication of the influencing level and the sensitivity index involving the technical field and the industrial field of G06Q in Table 9 is 106.8034.

Similarly, the foregoing method of obtaining the multiplication of the influencing level and the sensitivity index of the technology classification G06Q may be also applied to the other nine technology classifications, thereby obtaining the multiplication of the influencing level and the sensitivity index with regard to each of the technology classifications.

By the way, the numbers of whole technology classifications in the first to fourth patent groups are respectively 387, 461, 387 and 461 as shown in the following Table 10, and therefore 387 multiplications of the influencing level and the sensitivity index can be obtained in the first patent group.

Table 10

| Classification | Number of technology classifications | Minimum value | Maximum value | Average | Standard deviation |
|---|---|---|---|---|---|
| First patent group | 387 | 0.08 | 106.80 | 4.80 | 9.09 |
| Second patent group | 461 | 0.13 | 135.47 | 6.00 | 11.04 |
| Third patent group | 387 | 0.12 | 163.23 | 7.25 | 13.78 |
| Fourth patent group | 461 | 0.24 | 256.15 | 11.17 | 20.66 |

Table 10 lists information about the multiplication matrix of the influencing level and the sensitivity index with regard to each of the patent groups. Here, the multiplication of the influencing level and the sensitivity index means a spillover influence of the technology classification from the analysis result of the third model.

In case of the first patent group, the number of technology classifications having the spillover influences is 387, a spillover influence value in the technology classification having the minimum spillover influence is 0.08, and a spillover influence value in the technology classification having the maximum spillover influence is 106.80. Further, the spillover influences of the technology classifications average out at 4.80, and have a standard deviation of 9.09.

In case of the second patent group, the number of technology classifications having the spillover influences is 461, a spillover influence value in the technology classification having the minimum spillover influence is 0.13, and a spillover influence value in the technology classification having the maximum spillover influence is 135.47. Further, the spillover influences of the technology classifications average out at 6.00, and have a standard deviation of 11.04.

In case of the third patent group, the number of technology classifications having the spillover influences is 387, a spillover influence value in the technology classification having the minimum spillover influence is 0.12, and a spillover influence value in the technology classification having the maximum spillover influence is 165.23. Further, the spillover influences of the technology classifications average out at 7.25, and have a standard deviation of 13.78.

In case of the fourth patent group, the number of technology classifications having the spillover influences is 461, a spillover influence value in the technology classification having the minimum spillover influence is 0.24, and a spillover influence value in the technology classification having the maximum spillover influence is 256.15. Further, the spillover influences of the technology classifications average out at 11.17, and have a standard deviation of 20.66.

Referring to Table 10, the first patent group and the third patent group have the same number of technology classifications, and the second patent group and the fourth patent group have the same number of technology classifications. Therefore, it may be determined that the minimum support level between the minimum support level and the minimum confidence level used as a reference for the patent group is employed as a criterion for setting the number of technology classifications.

Table 11-1

| First patent group | G06Q | H04B | G08G | C12N | C10G | A23L | A61Q | H04M | G09F | C10L |
|---|---|---|---|---|---|---|---|---|---|---|
| Third model | 106.80 | 17.11 | 59.95 | 10.22 | 65.82 | 13.28 | 18.43 | 28.75 | 19.03 | 42.41 |

Table 11-2

| First patent group | G06Q | H04B | G08G | C12N | C10G | A23L | A61Q | H04M | G09F | C10L |
|---|---|---|---|---|---|---|---|---|---|---|
| Third model | 135.47 | 21.42 | 76.90 | 12.91 | 18.02 | 91.98 | 22.70 | 35.92 | 24.65 | 58.84 |

Table 11-3

| First patent group | G06Q | H04B | G08G | C12N | C10G | A23L | A61Q | H04M | G09F | C10L |
|---|---|---|---|---|---|---|---|---|---|---|
| Third model | 163.23 | 25.48 | 92.19 | 14.75 | 98.41 | 19.25 | 43.07 | 26.47 | 29.76 | 64.50 |

Table 11-4

| First patent group | G06Q | H04B | G08G | C12N | C10G | A23L | A61Q | H04M | G09F | C10L |
|---|---|---|---|---|---|---|---|---|---|---|
| Third model | 256.15 | 39.37 | 146.32 | 22.83 | 31.97 | 169.29 | 39.87 | 66.37 | 47.85 | 110.40 |

Meanwhile, Table 11-1 to Table 11-4 list result values of the same ten technology classifications extracted from results of applying the third model to each patent group.

In this case, it can be appreciated that one kind of technology classification has different spillover influences even though each patent group is subjected to the same model. Therefore, it can be appreciated that both the minimum support level and the minimum confidence level, used as criteria for classification of the patent group, influence the technical spillover effect.

Next, the fourth model of the technical spillover effect analysis method according to the present disclosure, i.e. a model of using the sum of the multiplication between the influencing level and the sensitivity index and the multiplication between the influenced level and the impact factor will be described.

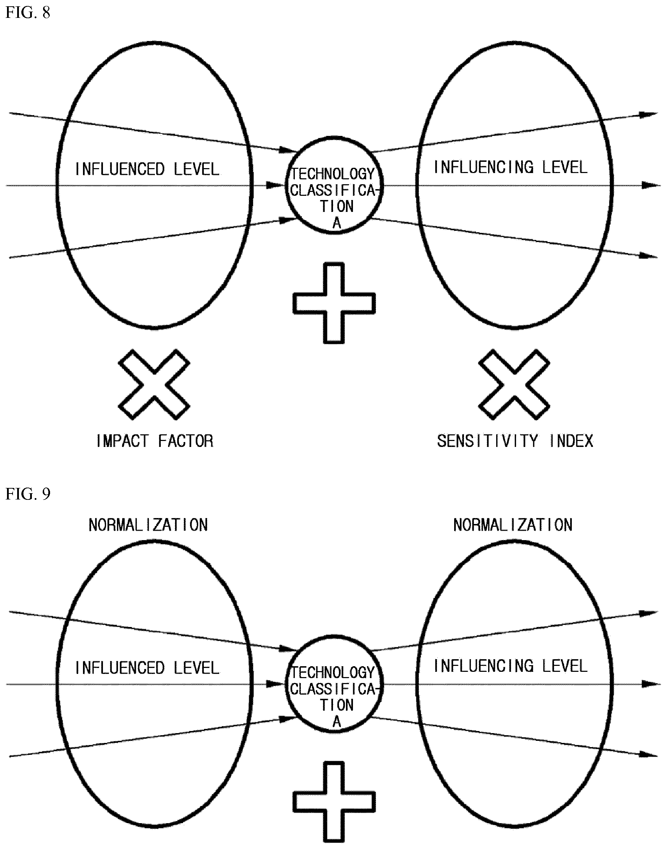

As shown in FIG. 8, the influencing level multiplied by the sensitivity index and the influenced level multiplied by the impact factor are aggregated to represent the technical spillover effect. In this case, the fourth model may be an analysis model of applying both the technical spillover extent and the industrial spillover extent.

Below, an example of a method of obtaining the sum of the influencing level multiplied by the sensitivity index and the influenced level multiplied by the impact factor will be described.

First, the matrix with values of factors for obtaining the comprehensive spillover extent with regard to the technology classification of the first patent group is partially shown in the following Table 12.

Table 12

| Technology Classification | Influencing level | Influenced level | Sensitivity Index | Impact Factor | A(influencing X sensitivity) | B(influenced X impact) | A+B |
|---|---|---|---|---|---|---|---|
| G06Q | 20.2645 | 63.4670 | 5.2705 | 2.8448 | 106.8034 | 180.5510 | 287.3544 |
| H04B | 21.5236 | 20.8503 | 0.7948 | 0.7249 | 17.1066 | 147.0493 | 164.1559 |
| G08G | 20.7786 | 21.6577 | 2.8854 | 1.4191 | 59.9550 | 30.7254 | 90.6804 |
| C12N | 22.8875 | 93.0365 | 0.4464 | 0.7459 | 10.2158 | 69.3965 | 79.6123 |
| C10G | 19.2607 | 9.0809 | 3.4171 | 0.8765 | 65.8164 | 7.9593 | 73.7757 |
| A23L | 21.0464 | 52.2330 | 0.6308 | 1.1105 | 13.2761 | 58.0033 | 71.2794 |
| A61Q | 24.2055 | 41.0254 | 0.7614 | 1.1243 | 18.4301 | 46.1241 | 64.5543 |
| H04M | 21.5030 | 32.0802 | 1.3371 | 1.1010 | 28.7533 | 35.3208 | 64.0733 |
| G09F | 19.2931 | 27.1803 | 0.9862 | 1.4266 | 19.0268 | 38.7721 | 57.7989 |
| C10L | 18.8097 | 15.4374 | 2.2959 | 0.9705 | 42.4123 | 14.9816 | 57.3939 |

Table 12 shows the influencing level, the influenced level, the sensitivity index, the impact factor, the multiplication of the influencing level and the sensitivity index, the multiplication of the influenced level and the impact factor, and the sum of the multiplication between the influencing level and the sensitivity index and the multiplication between the influenced level and the impact factor with regard to the top 10 technology classifications, which are obtained in accordance with magnitudes of the comprehensive spillover extent.

Since the influencing level is obtained in the foregoing first model, the influenced level is obtained in the foregoing second model, and the sensitivity index is obtained in the foregoing third model, the descriptions thereof will be omitted. Meanwhile, the impact factor can be obtained by the foregoing Expression 8.

In this case, Table 12 shows that the technology classification G06Q has an influencing level of 20.2645, an influenced level of 63.4670, a sensitivity index of 5.2705, and an impact factor of 2.8448. Therefore, in case of G06Q in Table 12, the multiplication of the influencing level and the sensitivity index is 106.8034, and the multiplication of the influenced level and the impact factor is 180.5510. Thus, the sum of the multiplication between the influencing level and the sensitivity index and the multiplication between the influenced level and the impact factor is 287.3544.

Similarly, the method of obtaining the sum of the multiplication between the influencing level and the sensitivity index and the multiplication between the influenced level and the impact factor with regard to the foregoing technology classification G06Q may be also applied to the other nine technology classifications, thereby obtaining the sum of the multiplication between the influencing level and the sensitivity index and the multiplication between the influenced level and the impact factor with regard to each of the technology classifications.

By the way, the numbers of whole technology classifications in the first to fourth patent groups are respectively 387, 461, 387 and 461 as shown in the following Table 13, and therefore 387 sums of the multiplications between the influencing levels and the sensitivity indexes and the multiplications between the influenced levels and the impact factors can be obtained in the first patent group.

Table 13

| Classification | Number of technology classifications | Minimum value | Maximum value | Average | Standard deviation |
|---|---|---|---|---|---|
| First patent group | 387 | 0.09 | 287.35 | 10.05 | 21.21 |
| Second patent group | 461 | 0.14 | 419.43 | 13.03 | 28.86 |
| Third patent group | 387 | 0.13 | 436.46 | 15.16 | 32.00 |
| Fourth patent group | 461 | 0.26 | 785.76 | 24.20 | 53.64 |

Table 13 lists information about a matrix for the sum of the multiplication between the influencing level and the sensitivity index and the multiplication between the influenced level and the impact factor with regard to each of the patent groups. Here, the sum of the multiplication between the influencing level and the sensitivity index and the multiplication between the influenced level and the impact factor means a spillover influence of the technology classification from the analysis result of the fourth model.

In case of the first patent group, the number of technology classifications having the spillover influences is 387, a spillover influence value in the technology classification having the minimum spillover influence is 0.09, and a spillover influence value in the technology classification having the maximum spillover influence is 287.35. Further, the spillover influences of the technology classifications average out at 10.05, and have a standard deviation of 21.21.

In case of the second patent group, the number of technology classifications having the spillover influences is 461, a spillover influence value in the technology classification having the minimum spillover influence is 0.14, and a spillover influence value in the technology classification having the maximum spillover influence is 419.43. Further, the spillover influences of the technology classifications average out at 13.03, and have a standard deviation of 28.86.

In case of the third patent group, the number of technology classifications having the spillover influences is 387, a spillover influence value in the technology classification having the minimum spillover influence is 0.13, and a spillover influence value in the technology classification having the maximum spillover influence is 436.46. Further, the spillover influences of the technology classifications average out at 15.16, and have a standard deviation of 32.00.

In case of the fourth patent group, the number of technology classifications having the spillover influences is 461, a spillover influence value in the technology classification having the minimum spillover influence is 0.26, and a spillover influence value in the technology classification having the maximum spillover influence is 785.76. Further, the spillover influences of the technology classifications average out at 24.20, and have a standard deviation of 53.64.

Referring to Table 13, the first patent group and the third patent group have the same number of technology classifications, and the second patent group and the fourth patent group have the same number of technology classifications. Therefore, it may be determined that the minimum support level between the minimum support level and the minimum confidence level used as a reference for the patent group is employed as a criterion for setting the number of technology classifications.

Table 14-1

| First patent group | G06Q | H04B | G08G | C12N | C10G | A23L | A61Q | H04M | G09F | C10L |
|---|---|---|---|---|---|---|---|---|---|---|
| Fourth model | 287.35 | 164.16 | 90.69 | 76.61 | 73.78 | 71.28 | 64.55 | 64.07 | 57.80 | 57.39 |

Table 14-2

| First patent group | G06Q | H04B | G08G | C12N | C10G | A23L | A61Q | H04M | G09F | C10L |
|---|---|---|---|---|---|---|---|---|---|---|
| Fourth model | 419.43 | 251.92 | 124.40 | 120.15 | 113.36 | 105.53 | 93.86 | 90.98 | 85.48 | 83.59 |

Table 14-3

| First patent group | G06Q | H04B | G08G | C12N | C10G | A23L | A61Q | H04M | G09F | C10L |
|---|---|---|---|---|---|---|---|---|---|---|
| Fourth model | 436.46 | 245.38 | 138.26 | 116.37 | 110.52 | 103.33 | 96.09 | 94.32 | 89.53 | 87.24 |

Table 14-4

| First patent group | G06Q | H04B | G08G | C12N | C10G | A23L | A61Q | H04M | G09F | C10L |
|---|---|---|---|---|---|---|---|---|---|---|
| Fourth model | 785.76 | 464.34 | 234.25 | 216.00 | 200.37 | 194.39 | 168.66 | 168.34 | 163.35 | 156.33 |

Meanwhile, Table 14-1 to Table 14-4 list result values of ten technology classifications extracted in order of larger spillover influence from results of applying the fourth model to each patent group.

In this case, it can be appreciated that one kind of technology classification has different influencing levels and order of technology classifications is also different even though each patent group is subjected to the same model. Therefore, it can be appreciated that both the minimum support level and the minimum confidence level, used as criteria for classification of the patent group, influence the technical spillover effect.

Next, the fifth model of the technical spillover effect analysis method, i.e. a model of using the values obtained by normalizing and summing the influencing level and the influenced level of the second model will be described.

As shown in FIG. 9, the fifth model can be obtained by normalizing and summing the influencing level and the influenced level, which make the impact of the spillover extent obtained in FIG. 6.

This is because the deviation of the influenced level is very larger than that of the influencing level as a result of comparison between Table 4 and Table 7 and therefore a problem arises in that the influenced level is mainly reflected when the same weights are applied to obtain the sum.

Therefore, to solve the foregoing problem, the influencing level and the influenced level are normalized and summed during a process of calculating the impact.

In this case, when the most general normalization, i.e. z normalization is used, the influencing level or the influenced level may have a negative value. When the influencing level or the influenced level has the negative value, there is a problem that the spillover influence may be determined as being lower than the technology classification having the spillover effect of 0.

Therefore, according to one embodiment of the present disclosure, the minimum-maximum normalization represented by the following Expression 9 was used instead of the general z normalization to sum the influencing level and the influenced level after eliminating the deviations, thereby obtaining the fifth model.

$$\text{Normalizaed value} = \frac{origianl\ value\ (original\ value) - minimum\ value(\min)}{maximum\ value(\max) - minimum\ value(\min)}$$

In this case, the minimum-maximum normalization proceeds in such a manner that the minimum value is determined as 0, the maximum value is determined as 1, and the other values are adjusted according to corresponding ratios. Therefore, there is a possibility that both the technology classification having no spillover influences and the technology classification having the minimum value are determined as 0. Therefore, according to one embodiment of the present disclosure, the technology classification having the minimum value was determined and normalized, and then the value of the technology classification having the minimum value was arbitrarily set to 0.000001.

Below, an example of the method of obtaining the normalized impact will be described.

First, the matrix with values of factors for obtaining the comprehensive spillover extent with regard to the technology classification of the first patent group is partially shown in the following Table 15.

Table 15

| Technology Classification | Influencing level | Influenced level | Normalized Influencing level (A) | Normalized Influenced level (B) | A+B |
|---|---|---|---|---|---|
| A61K | 23.7872 | 200.4277 | 0.9689 | 0.8736 | 1.8425 |
| H04B | 21.5236 | 202.8503 | 0.8005 | 0.8842 | 1.6847 |
| H01L | 19.7460 | 229.3565 | 0.6687 | 1.0000 | 1.6687 |
| A61P | 24.0809 | 127.2991 | 0.9892 | 0.5529 | 1.5421 |
| H04W | 21.9388 | 152.1673 | 0.8314 | 0.6619 | 1.4933 |
| H04L | 21.6307 | 146.3815 | 0.8084 | 0.6361 | 1.4445 |
| C12N | 22.8875 | 93.0365 | 0.9019 | 0.4026 | 1.3045 |
| G06F | 20.0401 | 137.4398 | 0.6901 | 0.5973 | 1.2874 |
| C08L | 19.6011 | 124.3140 | 0.6574 | 0.5393 | 1.1967 |
| C07D | 23.4636 | 58.5421 | 0.9448 | 0.2513 | 1.1961 |

Table 15 shows the influencing level, the influenced level, the normalized influencing level, the normalized influenced level and the normalized impact with regard to the top 10 technology classifications, which are obtained in accordance with magnitudes of the comprehensive spillover extent.

Since the influencing level is obtained in the foregoing first model, and the influenced level is obtained in the foregoing second model, the descriptions thereof will be omitted. Meanwhile, the normalized influencing level and the normalized influenced level can be obtained by the foregoing Expression 9.

In this case, Table 15 shows the technology classification A61K has an influencing level of 23.7872 and an influenced level of 200.4227. If these influencing and influenced levels are normalized by the foregoing Expression 9, the normalized influencing level has a value of 0.9689, and the normalized influenced level has a value of 0.8736. Therefore, the sum of the normalized influencing level and the normalized influenced level, i.e. the normalized impact has a value of 1.8425.

Similarly, the foregoing method of obtaining the normalized impact of the technology classification A61K may be also applied to the other nine technology classifications, thereby obtaining the normalized impact with regard to each of the technology classifications.

By the way, the numbers of whole technology classifications in the first to fourth patent groups are respectively 387, 461, 387 and 461 as shown in the following Table 16, and therefore 387 normalized impacts can be obtained in the first patent group.

Table 16

| Classification | Number of technology classifications | Minimum value | Maximum value | Average | Standard deviation |
|---|---|---|---|---|---|
| First patent group | 387 | 0.00 | 1.84 | 0.72 | 0.21 |
| Second patent group | 461 | 0.00 | 1.85 | 0.89 | 0.15 |
| Third patent group | 387 | 0.00 | 1.83 | 0.79 | 0.22 |
| Fourth patent group | 461 | 0.00 | 1.88 | 0.96 | 0.16 |

Table 16 lists information about a normalized impact matrix for the sum of the normalized influencing level and the normalized influenced level with regard to each of the patent groups. Here, the sum of the normalized influencing level and the normalized influenced level, i.e. the normalized impact means a spillover influence of the technology classification from the analysis result of the fifth model.

In case of the first patent group, the number of technology classifications having the spillover influences is 387, a spillover influence value in the technology classification having the minimum spillover influence is 0.00, and a spillover influence value in the technology classification having the maximum spillover influence is 1.84. Further, the spillover influences of the technology classifications average out at 0.72, and have a standard deviation of 0.21.

In case of the second patent group, the number of technology classifications having the spillover influences is 461, a spillover influence value in the technology classification having the minimum spillover influence is 0.00, and a spillover influence value in the technology classification having the maximum spillover influence is 1.85. Further, the spillover influences of the technology classifications average out at 0.79, and have a standard deviation of 0.15.

In case of the third patent group, the number of technology classifications having the spillover influences is 387, a spillover influence value in the technology classification having the minimum spillover influence is 0.00, and a spillover influence value in the technology classification having the maximum spillover influence is 1.83. Further, the spillover influences of the technology classifications average out at 0.79, and have a standard deviation of 0.22.

In case of the fourth patent group, the number of technology classifications having the spillover influences is 461, a spillover influence value in the technology classification having the minimum spillover influence is 0.00, and a spillover influence value in the technology classification having the maximum spillover influence is 1.88. Further, the spillover influences of the technology classifications average out at 0.96, and have a standard deviation of 0.16.

Referring to Table 16, the first patent group and the third patent group have the same number of technology classifications, and the second patent group and the fourth patent group have the same number of technology classifications. Therefore, it may be determined that the minimum support level between the minimum support level and the minimum confidence level used as a reference for the patent group is employed as a criterion for setting the number of technology classifications.

Table 17-1

| First patent group | G06Q | G08G | C10G | F17D | C10L | A23K | B21B | H04B | H04M | C07C |
|---|---|---|---|---|---|---|---|---|---|---|
| Fifth model | 0.9797 | 0.8346 | 0.6665 | 0.7253 | 0.6602 | 0.8564 | 0.7066 | 1.6847 | 0.9342 | 0.9555 |

Table 17-2

| First patent group | G06Q | G10G | G08G | C10L | F17D | B21B | A23K | H04B | H04M | A23B |
|---|---|---|---|---|---|---|---|---|---|---|
| Fifth model | 1.083 | 0.903 | 0.9411 | 0.8913 | 0.8645 | 0.9031 | 0.9957 | 1.7585 | 0.9979 | 0.9992 |

Table 17-3

| First patent group | G06Q | G08G | C10G | F17D | C10L | A23K | B21B | H04B | H04M | C07C |
|---|---|---|---|---|---|---|---|---|---|---|
| Fifth model | 1.0732 | 0.9391 | 0.7166 | 0.7983 | 0.7336 | 0.8091 | 0.8566 | 1.7388 | 0.9989 | 0.7992 |

Table 17-4

| First patent group | G06Q | G10G | G08G | C10L | F17D | B21B | A23K | H04B | H04M | A23B |
|---|---|---|---|---|---|---|---|---|---|---|
| Fifth model | 1.173 | 0.9583 | 1.0412 | 0.9703 | 0.9401 | 1.0107 | 0.9968 | 1.0586 | 1.8094 | 0.9438 |

Meanwhile, Table 17-1 to Table 17-4 list result values of ten technology classifications extracted in order of larger spillover influence from results of applying the fifth model to each patent group. In this case, it can be appreciated that one kind of technology classification has different influencing levels and order of technology classifications is also different even though each patent group is subjected to the same model. Therefore, it can be appreciated that both the minimum support level and the minimum confidence level, used as criteria for classification of the patent group, influence the technical spillover effect.

Last, the sixth model of the technical spillover effect analysis method according to the present disclosure, i.e. a model of using the sum of the multiplication between the normalized influencing level and the sensitivity index and the multiplication between the normalized influenced level and the impact factor will be described.

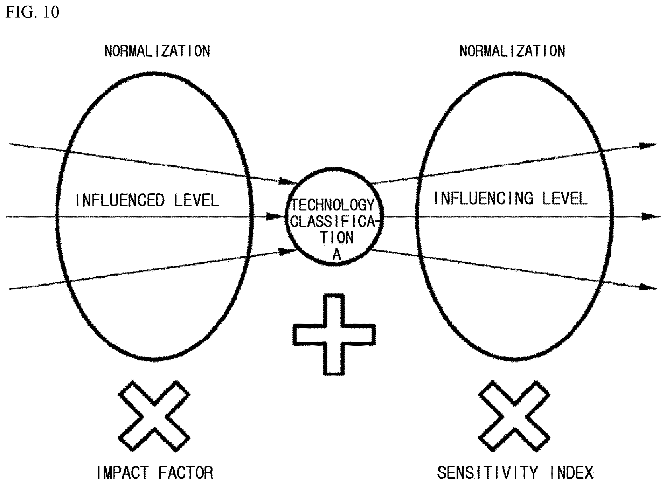

As shown in FIG. 10, by using the sum of the normalized influencing level multiplied by the sensitivity index and the normalized influenced level multiplied by the impact factor, which are obtained in FIG. 9, the sixth model can be an analysis model of applying both the technical spillover extent and the industrial spillover extent.

Below, an example of a method of obtaining the sum of the multiplication between the normalized influencing level and the sensitivity index and the multiplication between the normalized influenced level and the impact factor will be described.

First, the matrix with values of factors for obtaining the comprehensive spillover extent with regard to the technology classification of the first patent group is partially shown in the following Table 18.

Table 18

| Technology Classification | (A) Norm. Influencing | (B) Norm. Influenced | (C) Sensitivity Index | (D) Impact Factor | AxC+BxD |
|---|---|---|---|---|---|
| G06Q | 0.7068 | 0.2729 | 5.2705 | 2.8448 | 4.5015 |
| G06G | 0.7450 | 0.0896 | 2.8854 | 1.4191 | 2.2768 |
| C10G | 0.6321 | 0.3440 | 3.4171 | 0.8765 | 2.4615 |
| F17D | 0.7170 | 0.0083 | 2.0523 | 1.2238 | 1.4817 |
| C10L | 0.5979 | 0.0623 | 2.2559 | 0.9705 | 1.4093 |
| A23K | 0.8307 | 0.0257 | 1.6339 | 0.9419 | 1.3815 |
| B21B | 0.6312 | 0.0754 | 1.9029 | 1.0113 | 1.2774 |
| B04B | 0.8005 | 0.8842 | 0.7948 | 0.7249 | 1.2772 |
| B04M | 0.7989 | 0.1353 | 1.3371 | 1.1010 | 1.2172 |
| C07C | 0.7893 | 0.1662 | 1.2389 | 0.3508 | 1.0362 |

Table 18 shows the normalized influencing level, the normalized influenced level, the sensitivity index, the impact factor, and the sum of the multiplication between the normalized influencing level and the sensitivity index and the multiplication between the normalized influenced level and the impact factor with regard to the top 10 technology classifications, which are obtained in accordance with magnitudes of the comprehensive spillover extent.

Since the sensitivity index and the impact factor are obtained in the foregoing fourth model, and the normalized influencing level and the normalized influenced level are obtained in the foregoing fifth model, the descriptions thereof will be omitted.

In this case, Table 18 shows that the technology classification G06Q has a normalized influencing level of 0.7068 and a normalized influenced level of 0.2729, and further has a sensitivity index of 5.2705, and an impact factor of 2.8448. Therefore, the multiplication of the normalized influencing level and the sensitivity index is 3.7250, and the multiplication of the normalized influenced level and the impact factor is 0.7764. Therefore, the sum of the multiplication between the normalized influencing level and the sensitivity index and the multiplication between the normalized influenced level and the impact factor is 4.5015.

Similarly, the foregoing method of obtaining the normalized impact of technology classification A61K may be also applied to the other nine technology classifications, thereby obtaining the sum of the multiplication between the normalized influencing level and the sensitivity index and the multiplication between the normalized influenced level and the impact factor with regard to each of the technology classifications.

By the way, the numbers of whole technology classifications in the first to fourth patent groups are respectively 387, 461, 387 and 461 as shown in the following Table 19, and therefore 387 sums of the multiplications between the normalized influencing levels and the sensitivity indexes and the multiplications between the normalized influenced levels and the impact factors can be obtained in the first patent group.

Table 19

| Classification | Number of technology classifications | Minimum value | Maximum value | Average | Standard deviation |
|---|---|---|---|---|---|
| First patent gr oup | 387 | 0.00 | 4.50 | 0.18 | 0.36 |
| Second patent group | 461 | 0.00 | 5.03 | 0.21 | 0.39 |
| Third patent g roup | 387 | 0.00 | 4.99 | 0.20 | 0.39 |
| Fourth patent group | 461 | 0.00 | 5.50 | 0.22 | 0.42 |

Table 19 lists information about a matrix for the sum of the multiplication between the normalized influencing level and the sensitivity index and the multiplication between the normalized influenced level and the impact factor with regard to each of the patent groups. Here, the sum of the multiplication between the normalized influencing level and the sensitivity index and the multiplication between the normalized influenced level and the impact factor means a spillover influence of the technology classification from the analysis result of the sixth model.

In case of the first patent group, the number of technology classifications having the spillover influences is 387, a spillover influence value in the technology classification having the minimum spillover influence is 0.00, and a spillover influence value in the technology classification having the maximum spillover influence is 4.50. Further, the spillover influences of the technology classifications average out at 0.18, and have a standard deviation of 0.36.

In case of the second patent group, the number of technology classifications having the spillover influences is 461, a spillover influence value in the technology classification having the minimum spillover influence is 0.00, and a spillover influence value in the technology classification having the maximum spillover influence is 5.03. Further, the spillover influences of the technology classifications average out at 0.21, and have a standard deviation of 0.39.

In case of the third patent group, the number of technology classifications having the spillover influences is 387, a spillover influence value in the technology classification having the minimum spillover influence is 0.00, and a spillover influence value in the technology classification having the maximum spillover influence is 4.99. Further, the spillover influences of the technology classifications average out at 0.20, and have a standard deviation of 0.39.

In case of the fourth patent group, the number of technology classifications having the spillover influences is 461, a spillover influence value in the technology classification having the minimum spillover influence is 0.00, and a spillover influence value in the technology classification having the maximum spillover influence is 5.50. Further, the spillover influences of the technology classifications average out at 0.22, and have a standard deviation of 0.42.

Referring to Table 19, the first patent group and the third patent group have the same number of technology classifications, and the second patent group and the fourth patent group have the same number of technology classifications. Therefore, it may be determined that the minimum support level between the minimum support level and the minimum confidence level used as a reference for the patent group is employed as a criterion for setting the number of technology classifications.

Table 20-1

| First patent group | G06Q | G08G | C10G | F17D | C10L | A23K | B21B | H04B | H04M | C07C |
|---|---|---|---|---|---|---|---|---|---|---|
| Sixth model | 4.5015 | 2.2768 | 2.1901 | 1.4816 | 1.4092 | 1.3815 | 1.2774 | 1.2772 | 1.2172 | 1.0362 |

Table 20-2

| First patent group | G06Q | G10G | G08G | C10L | F17D | B21B | A23K | H04B | H04M | A23B |
|---|---|---|---|---|---|---|---|---|---|---|
| Sixth model | 5.0292 | 2.9797 | 2.5798 | 1.9207 | 1.7645 | 1.6459 | 1.6058 | 1.3351 | 1.3014 | 1.2314 |

Table 20-3

| First patent group | G06Q | G08G | C10G | F17D | C10L | A23K | B21B | H04B | H04M | C07C |
|---|---|---|---|---|---|---|---|---|---|---|
| Sixth model | 4.9886 | 2.5793 | 2.3613 | 1.6311 | 1.5745 | 1.4727 | 1.3820 | 1.3203 | 1.3038 | 1.1465 |

Table 20-4

| First patent group | G06Q | G10G | G08G | C10L | F17D | B21B | A23K | H04B | H04M | A23B |
|---|---|---|---|---|---|---|---|---|---|---|
| Sixth model | 5.4979 | 3.1688 | 2.8686 | 2.0986 | 1.9189 | 1.8507 | 1.6076 | 1.3825 | 1.3757 | 1.3510 |

Meanwhile, Table 20-1 to Table 20-4 list result values of ten technology classifications extracted in order of larger spillover influence from results of applying the sixth model to each patent group.

In this case, it can be appreciated that one kind of technology classification has different influencing levels and order of technology classifications is also different even though each patent group is subjected to the same model. Therefore, it can be appreciated that both the minimum support level and the minimum confidence level, used as criteria for classification of the patent group, influence the technical spillover effect.

In the technical spillover effect analysis method according to one embodiment of the present disclosure, referring to Table 3 to Table 20, 632 technology classifications were considered to be analyzed by the technical co-classification extraction among a total of 646 technology classifications targeted to be analyzed, and only 387 technology classifications had the spillover effects in case of the first and third patent groups. Further, only 461 technology classifications had the spillover effects in case of the second and fourth patent groups.

In this case, it can be determined that 259 technology classifications and 185 technology classifications, which are determined as having no spillover effects, fall short of the standards of the minimum support level. That is, it can be appreciated that the foregoing technology classifications have the minimum support level lower than 0.1% in case of the first and third patent groups, and have the minimum support level lower than 0.05% in case of the second and fourth patent groups.

In more detail, 632 sub categories appeared a total of 520,498 times in each individual technology classification of the first and third patent groups, and 259 sub categories, which were determined as having no spillover effects, among the 632 sub categories appeared a total of 14,072 times, i.e. merely 2.7% of the total number of times.

Therefore, each of 259 sub categories averagely appeared by 0.01%, and this is regarded as a sufficiently ignorable value.

As described above, the technical spillover effect analysis method according to the present disclosure has been described.

In short, the technical spillover effect analysis method according to the present disclosure first extracts the technical co-classification, and obtains the direct spillover extent using the technical co-classification. The obtained direct spillover extent may be used in representing the technical spillover effect between the corresponding technology classification and a specific technology classification.

Next, the comprehensive spillover extent is obtained using the obtained direct spillover extent. In this case, the factors of the comprehensive spillover extent are used to acquire the first to sixth models.

Meanwhile, the technical spillover effect analysis method according to the present disclosure may be achieved by computing. In this case, the technical spillover effect analysis method analyzes information input by a user on the basis of previously analyzed data and outputs the grades of the technical spillover effects. In this case, the information input by a user may be the patent data, and preferably the technical spillover effect analysis method implemented with the computing may obtain the technology classification from the patent data and obtain the grades through the comparison with the previously computed technology classification.

Although embodiments of the present disclosure have been described, it will be appreciated that the present inventive concept is not limited to the embodiments proposed in this specification, and a person having an ordinary skill in the art can readily propose another embodiment by addition, modification, deletion, supplement, etc. without departing from the scope of the present disclosure.

[Industrial Applicability]

According to the present disclosure, it is easy to check the technical spillover effects of the patent technology based on a relationship between the plurality of patent technology classifications using a typical personal computer, thereby having industrial applicability.

**Claims**

1. A technical spillover effect analysis method to be processed in a typical personal computer comprising a central processing unit, a storage unit, and a memory, the method comprising operations of:

   a) obtaining technical co-classification information with regard to patents comprising two or more technology classifications from patent data comprising a plurality of patents classified into preset technology classifications;
   b) calculating a direct spillover extent with regard to each technology classification of the obtained technical co-classification information;
   c) calculating a comprehensive spillover extent by using the direct spillover extent;
   d) setting a minimum support level to 0.1% and 0.05%, setting a minimum confidence level to 0.1% and 0.05%, setting a first patent group on the basis of the minimum support level of 0.1% and the minimum confidence level of 0.1%, setting a second patent group on the basis of the minimum support level of 0.05% and the minimum confidence level of 0.1%, setting a third patent group on the basis of the minimum support level of 0.1% and the minimum confidence level of 0.05%, and setting a fourth patent group on the basis of the minimum support level 0.05% and the minimum confidence level 0.05% to make the number of patents included in each of the patent groups be graded; and
   e) analyzing how great the minimum support level and the minimum confidence level have effects on a spillover influence by applying and analyzing a first model for analyzing an influencing level with regard to each of the first to fourth patent groups, a second model for analyzing the influencing level and an influenced level, a third model for obtaining a multiplication of the influencing level and a sensitivity index, a fourth model for summing the multiplication between the influencing level and the sensitivity index and a multiplication between the influenced level and an impact factor, a fifth model for normalizing and summing the influencing level and the influenced level of the second model, and a sixth model for summing a multiplication between the normalized influencing level and the sensitivity index and a multiplication between the normalized influenced level and the impact factor.

**2.** The method of claim 1, wherein the direct spillover extent in operation b) comprises the confidence level calculated by the following Expression 1, and the support level calculated by the following Expression 2:

Expression 1

$$\text{Confidence level } (A \to B) = \frac{\text{number of patents concurrently including technology classifications A and B}}{\text{number of patents including technology classification A}} = P(B|A)$$

; an

Expression 2

$$\text{Support level } (A) = \frac{\text{number of patents including technology classification A}}{\text{total number of patents}} = P(A).$$

**3.** The method of claim 1, wherein operation c) comprises:

converting the direct spillover extent into a response matrix using the following Expression 3;
obtaining raw data matrix (DRM) with regard to the response matrixes using the following Expression 4;
normalizing the DRM through the following Expression 5; and
obtaining a comprehensive spillover extent matrix by processing the normalized DRM through the following Expression 6, wherein

Expression 3

$$X^k = \left[x_{ij}^k\right]$$

(where, X : a response matrix between technology classifications, x : an element of the response matrix between the technology classifications, k : a patent number, and $x_{ij}$ : a magnitude of an effect that a technology classification i has on a technology classification j),

Expression 4

$$a_{ij} = \frac{1}{H}\sum_{k=1}^{H} x_{ij}^k, A = \left[a_{ij}\right]$$

(where, A : an impact comparison matrix, $a_{ij}$ : a magnitude of an effect that a technology classification i has on a technology classification j, and H : the number of patents to be analyzed),

Expression 5

$$s \;=\; \max \left( max_{1 \le i \le n} \sum_{j=1}^{n} a_{ij} \,, max_{1 \le j \le n} \sum_{i=1}^{n} a_{ij} \right), D = \frac{A}{s} = \left[ d_{ij} \right]$$

(where, A : a DRM, D : a normalized DRM), and

Expression 6

$$\underset{n \to \infty}{\text{Lim}} (I + D + D^2 + D^3 + \cdots + D^m) = (I - D)^{-1}$$

$$T = \left[ t_{ij} \right] = (D + D^2 + D^3 + \cdots + D^m) = D \, (I - D)^{-1}$$

(where, I : a unit matrix, D : a normalized DRM, and T : a comprehensive spillover extent matrix).

**4.** The method of claim 3, wherein the influencing level is a row sum of the comprehensive spillover extent matrix, and the influenced level is a column sum of the comprehensive spillover extent matrix.

**5.** The method of claim 3, wherein the sensitivity index and the impact factor are represented by the following Expression 7:

Expression 7

$$\text{Sensitivity index} \;=\; [Sensitivity_i]_{nX1} = \left( \sum_{j=1}^{n} \frac{\sum_{j=1}^{n} r_{ij}}{\frac{1}{n} \sum_{i=1}^{n} \sum_{j=1}^{n} r_{ij}} \right)_{nX1}$$

$$\text{Impact factor} \;=\; [Impact_j]_{1Xn} = \left( \sum_{i=1}^{n} \frac{\sum_{i=1}^{n} r_{ij}}{\frac{1}{n} \sum_{i=1}^{n} \sum_{j=1}^{n} r_{ij}} \right)_{1Xn}$$

(where, $r_{ij}$ is an element of the production inducement coefficients table, and n is the number of all industry categories).

FIG. 1

FIG. 2

Patent
IPC
Main IPC
Sub IPC

FIG. 3

IPC
Knowledge flow

FIG. 4

EXTRACT TECHNICAL CO-CLASSIFICATION
INFORMATION FROM PATENT DATA

DERIVE DIRECT SPILLOVER EXTENT
BETWEEN TECHNOLOGY CLASSIFICATIONS

FIG. 5

TECHNOLOGY
CLASSIFICATION
A

INFLUENCING LEVEL

FIG. 6

TECHNOLOGY
CLASSIFICATION

TECHNOLOGY
CLASSIFICA-
TION
A

INFLUENCING LEVEL

FIG. 7

TECHNOLOGY
CLASSIFICATION
A

INFLUENCING LEVEL

SENSITIVITY INDEX

FIG. 8

INFLUENCED LEVEL

TECHNOLOGY CLASSIFICA- TION A

INFLUENCING LEVEL

IMPACT FACTOR

SENSITIVITY INDEX

FIG. 9

NORMALIZATION

NORMALIZATION

INFLUENCED LEVEL

TECHNOLOGY CLASSIFICA- TION A

INFLUENCING LEVEL

FIG. 10

NORMALIZATION

NORMALIZATION

INFLUENCED LEVEL

TECHNOLOGY
CLASSIFICA-
TION
A

INFLUENCING LEVEL

IMPACT FACTOR

SENSITIVITY INDEX

## INTERNATIONAL SEARCH REPORT

| International application No. |
|---|
| **PCT/KR2016/007592** |

**A. CLASSIFICATION OF SUBJECT MATTER**

*G06Q 50/18(2012.01)i, G06Q 10/06(2012.01)i*

According to International Patent Classification (IPC) or to both national classification and IPC

**B. FIELDS SEARCHED**

Minimum documentation searched (classification system followed by classification symbols)

G06Q 50/18; G06F 15/16; G06F 19/00; G06Q 10/06; G06F 9/44; G06F 17/30; G06F 9/46; G06Q 50/26

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: patent, classification code, technical field, technical ripple effect, approval rating, reliability

**C. DOCUMENTS CONSIDERED TO BE RELEVANT**

| Category* | Citation of document, with indication, where appropriate, of the relevant passages | Relevant to claim No. |
|---|---|---|
| A | KR 10-2011-0011065 A (BIA GLOBAL) 08 February 2011<br>See paragraphs [0009], [0013], claims 1-10 and figure 1. | 1-5 |
| A | KR 10-1414502 B1 (KOREA INSTITUTE OF GEOSCIENCE AND MINERAL RESOURCES(KIGAM)) 04 July 2014<br>See paragraphs [0068], [0078]-[0084], claims 1-11 and figure 4. | 1-5 |
| A | KR 10-2013-0053931 A (KOREA INSTITUTE OF SCIENCE & TECHNOLOGY INFORMATION) 24 May 2013<br>See abstract, claims 1-5 and figure 3. | 1-5 |
| A | KR 10-0387134 B1 (CHOI, Sung Goan) 18 June 2003<br>See page 6, claim 1 and figure 1b. | 1-5 |
| A | US 2007-0136116 A1 (GERMERAAD, Paul B. et al.) 14 June 2007<br>See paragraphs [0256]-[0281], claim 1 and figures 49-53. | 1-5 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 NOVEMBER 2016 (02.11.2016) | **02 NOVEMBER 2016 (02.11.2016)** |
| Name and mailing address of the ISA/KR<br>Korean Intellectual Property Office<br>Government Complex-Daejeon, 189 Seonsa-ro, Daejeon 302-701, Republic of Korea | Authorized officer |
| Facsimile No. 82-42-472-7140 | Telephone No. |

Form PCT/ISA/210 (second sheet) (January 2015)

INTERNATIONAL SEARCH REPORT
Information on patent family members

International application No.

**PCT/KR2016/007592**

| Patent document cited in search report | Publication date | Patent family member | Publication date |
|---|---|---|---|
| KR 10-2011-0011065 A | 08/02/2011 | KR 10-1067846 B1 | 27/09/2011 |
| KR 10-1414502 B1 | 04/07/2014 | NONE | |
| KR 10-2013-0053931 A | 24/05/2013 | KR 10-1299460 B1 | 29/08/2013 |
| KR 10-0387134 B1 | 18/06/2003 | NONE | |
| US 2007-0136116 A1 | 14/06/2007 | AU 1996-57127 B2 | 04/11/1999 |
| | | AU 1998-71899 B2 | 28/10/1999 |
| | | AU 1999-57808 A1 | 14/03/2000 |
| | | AU 2000-36091 A1 | 21/09/2000 |
| | | AU 2000-42161 A1 | 23/10/2000 |
| | | AU 2000-42197 A1 | 23/10/2000 |
| | | AU 2001-50988 A1 | 08/10/2001 |
| | | CA 2176729 C | 30/01/2007 |
| | | CA 2292500 A1 | 10/12/1998 |
| | | CA 2365396 A1 | 08/09/2000 |
| | | CA 2370021 A1 | 12/10/2000 |
| | | CA 2370036 A1 | 12/10/2000 |
| | | CN 1141093 A | 22/01/1997 |
| | | CN 1153161 C | 09/06/2004 |
| | | CN 1184539 A | 10/06/1998 |
| | | CN 1205573 C | 08/06/2005 |
| | | CN 1755674 A | 05/04/2006 |
| | | CN 1755674 B | 08/12/2010 |
| | | CN 1928865 A | 14/03/2007 |
| | | CN 1928865 B | 14/09/2011 |
| | | EP 0731948 A1 | 27/04/2005 |
| | | EP 0731948 B1 | 20/07/2005 |
| | | EP 0731948 B8 | 14/09/2005 |
| | | EP 0832460 A1 | 27/08/2003 |
| | | EP 0986789 A1 | 22/03/2000 |
| | | EP 0986789 B1 | 18/09/2002 |
| | | EP 0986789 B2 | 21/01/2009 |
| | | EP 0986934 A1 | 22/03/2000 |
| | | EP 1166218 A2 | 02/01/2002 |
| | | EP 1173812 A2 | 23/01/2002 |
| | | EP 1184798 A2 | 06/03/2002 |
| | | EP 1184798 A3 | 20/10/2004 |
| | | EP 1188124 A1 | 20/03/2002 |
| | | EP 1548617 A2 | 29/06/2005 |
| | | EP 1548617 A3 | 20/07/2005 |
| | | JP 04907715 B2 | 04/04/2012 |
| | | JP 05143980 B2 | 13/02/2013 |
| | | JP 09-505422 A | 27/05/1997 |
| | | JP 11-504143 A | 06/04/1999 |
| | | JP 2002-502529 A | 22/01/2002 |
| | | JP 2002-538554 A | 12/11/2002 |

Form PCT/ISA/210 (patent family annex) (January 2015)

INTERNATIONAL SEARCH REPORT
Information on patent family members

International application No.

**PCT/KR2016/007592**

| Patent document cited in search report | Publication date | Patent family member | Publication date |
|---|---|---|---|
| | | JP 2002-541558 A | 03/12/2002 |
| | | JP 2003-527647 A | 16/09/2003 |
| | | JP 2010-123134 A | 03/06/2010 |
| | | JP 2011-154696 A | 11/08/2011 |
| | | KR 10-0345945 B1 | 25/11/2002 |
| | | KR 10-1999-0007826 A | 25/01/1999 |
| | | US 2002-0007373 A1 | 17/01/2002 |
| | | US 2002-0035499 A1 | 21/03/2002 |
| | | US 2003-0046307 A1 | 06/03/2003 |
| | | US 2005-0160357 A1 | 21/07/2005 |
| | | US 2005-0256965 A1 | 17/11/2005 |
| | | US 2007-0208669 A1 | 06/09/2007 |
| | | US 5623679 A | 22/04/1997 |
| | | US 5623681 A | 22/04/1997 |
| | | US 5696963 A | 09/12/1997 |
| | | US 5799325 A | 25/08/1998 |
| | | US 5806079 A | 08/09/1998 |
| | | US 5807183 A | 15/09/1998 |
| | | US 5809318 A | 15/09/1998 |
| | | US 5845301 A | 01/12/1998 |
| | | US 5848409 A | 08/12/1998 |
| | | US 5857467 A | 12/01/1999 |
| | | US 5950214 A | 07/09/1999 |
| | | US 5991751 A | 23/11/1999 |
| | | US 5991780 A | 23/11/1999 |
| | | US 6018749 A | 25/01/2000 |
| | | US 6043474 A | 28/03/2000 |
| | | US 6339767 B1 | 15/01/2002 |
| | | US 6389434 B1 | 14/05/2002 |
| | | US 6499026 B1 | 24/12/2002 |
| | | US 6877137 B1 | 05/04/2005 |
| | | US 6963920 B1 | 08/11/2005 |
| | | US 7437471 B2 | 14/10/2008 |
| | | US 7523126 B2 | 21/04/2009 |
| | | US 7716060 B2 | 11/05/2010 |
| | | US 7797336 B2 | 14/09/2010 |
| | | US 7949728 B2 | 24/05/2011 |
| | | US 7966328 B2 | 21/06/2011 |
| | | WO 00-11575 A1 | 02/03/2000 |
| | | WO 00-52618 A2 | 08/09/2000 |
| | | WO 00-52618 A3 | 26/04/2001 |
| | | WO 00-60495 A2 | 12/10/2000 |
| | | WO 00-60495 A3 | 07/09/2001 |
| | | WO 00-60496 A2 | 12/10/2000 |
| | | WO 00-60496 A3 | 22/02/2001 |
| | | WO 01-73657 A1 | 04/10/2001 |
| | | WO 95-14280 A1 | 26/05/1995 |
| | | WO 96-33465 A1 | 24/10/1996 |
| | | WO 98-55945 A1 | 10/12/1998 |
| | | WO 98-56211 A1 | 10/12/1998 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1414502 B